# EUROPEAN PATENT APPLICATION

(11) **EP 4 462 876 A1**
(43) Date of publication of application: **13.11.2024**
(21) Application number: 24174775.7
(22) Date of filing: 08.05.2024
(51) Int. Cl.: H04W 36/02, H04W 84/12

(54) **UPLINK FRAME HANDLING FOR ACCESS POINT ASSISTED ROAMING**

(30) Priority: 12.05.2023 US 202363501961 P; 24.04.2024 US 202418644205
(71) Applicant: Apple Inc., Cupertino, CA 95014 (US)
(72) Inventor: KNECKT, Jarkko L., Los Gatos (US); HEDAYAT, Ahmad Reza, Cupertino (US); WANG, Qi, Sunnyvale (US); LIU, Yong, Campbell (US); YONG, Su Khiong, Palo Alto (US); THAKUR, Sidharth R., San Jose (US); WU, Tianyu, Fremont (US); JIANG, Jinjing, San Jose (US); VERMA, Lochan, Danville (US)
(74) Representative: COPA Copenhagen Patents

(57) **Abstract**

This disclosure relates to methods for handling uplink frames in access point assisted roaming in a wireless local area network. A wireless device may establish a wireless association with a first access point. The wireless device may perform signaling to transition from the first access point to a second access point. The signaling may include an uplink reorder buffer handling request.

## Description

### TECHNICAL FIELD

The present application relates to wireless communication, including techniques and devices for handling uplink frames in access point assisted roaming in a wireless local area network architecture.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs), may take the form of smart phones or tablets that a user typically carries. One aspect of wireless communication that may commonly be performed by mobile devices may include wireless networking, for example over a wireless local area network (WLAN), which may include devices that operate according to one or more communication standards in the IEEE 802.11 family of standards. Such communication can be performed in an infrastructure setting as well as in a peer-to-peer setting.

Support for access point supported roaming may be an area of interest in wireless local area networking architecture development. However, there may be challenges to such development, for example including determining how to account for uplink frames in conjunction with roaming from one access point to another access point. Accordingly, improvements in the field are desired.

### SUMMARY

Embodiments are presented herein of, *inter alia*, systems, apparatuses, and methods for devices for handling uplink frames in access point assisted roaming in a wireless local area network (WLAN) environment.

A wireless device may include one or more antennas, one or more radios operably coupled to the one or more antennas, and a processor operably coupled to the one or more radios. The wireless device may be configured to establish a connection with an access point through a wireless local area network (WLAN) over multiple wireless links, or may be an access point configured to establish a connection with one or more other wireless devices through a WLAN over multiple wireless links. In some embodiments, the wireless device may operate in each of the multiple wireless links using a respective radio of the one or more radios.

According to the techniques described herein, a wireless device may perform roaming in a WLAN setting, for example including transitioning from associating with one access point to associating with another access point. The access points may assist with the transition. As part of the transition signaling, the wireless device may provide an uplink reorder buffer handling request, to indicate how to handle frames in the uplink reorder buffer for the wireless device at the access point from which the wireless device is transitioning. The request may indicate, for example, whether to forward uplink reorder buffered frames to the Internet (or other network), to forward uplink reorder buffered frames to the access point to which the wireless device is transitioning, or to discard uplink reorder buffered frames.

The sequence numbering scheme for the uplink communication between the wireless device and the new access point after the transition may be selected based at least in part on the selected approach to uplink reorder buffer handling. For example, this may include determining whether to reset sequence numbers or maintain sequence number continuity across the transition.

Note that such signaling may be performed for each individual user priority value for the wireless device during an access point assisted roaming event, or may be performed collectively to indicate how to handle uplink reorder buffered frames for the wireless device for multiple user priority values, according to various embodiments.

The techniques described herein may be implemented in and/or used with a number of different types of devices, including but not limited to cellular phones, tablet computers, accessory and/or wearable computing devices, portable media players, access point wireless devices, base stations and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments;
Figure 2 is a block diagram illustrating an example wireless device, according to some embodiments;
Figure 3 is a block diagram illustrating an example network element or access point, according to some embodiments; and
Figure 4 is a flowchart diagram illustrating an example method for handling uplink frames in access point assisted roaming in a wireless local area network, according to some embodiments;
Figures 5-6 illustrate example aspects of possible wireless local area network architectures, according to some embodiments;
Figure 7 is a signal flow diagram illustrating example aspects of possible roaming signaling within a mobility domain access point, according to some embodiments;
Figure 8 is a signal flow diagram illustrating example aspects of another possible access point transition signaling approach, according to some embodiments;
Figure 9 illustrates example aspects of a possible scenario in which a wireless device performs an access point transition, where the uplink reorder buffer at the original access point includes gaps for certain frames that were not successfully received, according to some embodiments;
Figure 10 illustrates aspects of an example scenario showing how uplink reorder buffer sequence numbering may be handled for an access point transition by a wireless device, in some embodiments;
Figure 11 is a signal flow diagram illustrating example aspects of possible uplink reorder buffered frame forwarding from one access point to another access point for a wireless device performing access point transitioning, according to some embodiments;
Figures 12-15 illustrate possible example aspects of frame formats for buffer forwarding from one access point to another access point for a wireless device performing access point transitioning, according to some embodiments;
Figure 16 illustrates possible example details of an approach to improving reorder buffer efficiency when uplink reorder buffered frames are forwarded from one access point to another access point for a wireless device performing access point transitioning, according to some embodiments; and
Figures 17-19 illustrate possible example aspects for uplink transmission buffer management including use of a pending queue at a wireless device performing access point transitioning, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:
**Memory Medium** - Any of various types of non-transitory memory devices or storage devices. The term "memory medium" is intended to include any computer system memory or random-access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.
**User Equipment (UE) (or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices, laptops, wearable devices (e.g. smart watch, smart glasses), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.
**Wireless Device or Station (STA)** - any of various types of computer systems or devices that perform wireless communications. A wireless device can be portable (or mobile) or may be stationary or fixed at a certain location. The terms "station" and "STA" are used similarly. A UE is an example of a wireless device.
**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.
**Base Station or Access Point (AP)** - The term "Base Station" (also called "eNB" or "gNB") has the full breadth of its ordinary meaning, and at least includes a wireless communication station installed at a fixed location and used to communicate as part of a wireless communication system. The term "access point" (or "AP") is typically associated with Wi-Fi-based communications and is used similarly.
**Processing Element (or Processor)** - refers to various elements or combinations of elements that are capable of performing a function in a device, e.g., in a communication device or in a network infrastructure device. Processors may include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.
**IEEE 802.11** - refers to technology based on IEEE 802.11 wireless standards such as 802.11a, 802.11.b, 802.11g, 802.11n, 802.11-2012, 802.11ac, 802.11ad, 802.11ax, 802.11ay, 802.11be, and/or other IEEE 802.11 standards. IEEE 802.11 technology may also be referred to as "Wi-Fi" or "wireless local area network (WLAN)" technology.
**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

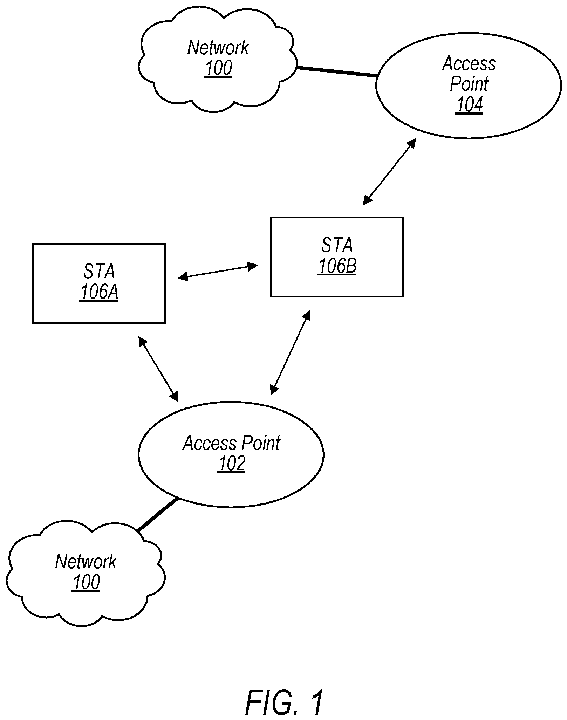

### Figures 1-2 - Wireless Communication System

Figure 1 illustrates an example of a wireless communication system. It is noted that Figure 1 represents one possibility among many, and that features of the present disclosure may be implemented in any of various systems, as desired. For example, embodiments described herein may be implemented in any type of wireless device. The wireless embodiment described below is one example embodiment.

As shown, the exemplary wireless communication system includes an access point (AP) 102, which communicates over a transmission medium with one or more wireless devices 106A, 106B, etc. Wireless devices 106A and 106B may be user devices, such as stations (STAs), non-AP STAs, or other WLAN devices.

The STA 106 may be a device with wireless network connectivity, such as a mobile phone, a hand-held device, a wearable device, a computer or a tablet, an unmanned aerial vehicle (UAV), an unmanned aerial controller (UAC), an automobile, or virtually any other type of wireless device. The STA 106 may include a processor (processing element) that is configured to execute program instructions stored in memory. The STA 106 may perform any of the method embodiments described herein by executing one or more of such stored instructions. Alternatively, or in addition, the STA 106 may include a programmable hardware element, such as an FPGA (field-programmable gate array), an integrated circuit (e.g., an ASIC), a programmable logic device (PLD), and/or any of various other possible hardware components that are configured to perform (e.g., individually or in combination) any of the method embodiments described herein, or any portion of any of the method embodiments described herein.

The AP 102 may be a stand-alone AP or an enterprise AP, and may include hardware that enables wireless communication with the STA devices 106A and 106B. The AP 102 may also be equipped to communicate with a network 100 (e.g., a WLAN, an enterprise network, and/or another communication network connected to the Internet, among various possibilities). Thus, the AP 102 may facilitate communication among the STA devices 106 and/or between the STA devices 106 and the network 100. In other implementations, AP102 can be configured to provide communications over one or more wireless technologies, such as any, any combination of, or all of 802.11 a, b, g, n, ac, ad, ax, ay, be and/or other 802.11 versions, or a cellular protocol, such as 5G or LTE, including in an unlicensed band (e.g., LAA, NR-U).

The communication area (or coverage area) of the AP 102 may be referred to as a basic service area (BSA) or cell. The AP 102 and the STAs 106 may be configured to communicate over the transmission medium using any of various radio access technologies (RATs) or wireless communication technologies, such as Wi-Fi, LTE, LTE-Advanced (LTE-A), 5G NR, ultra-wideband (UWB), Bluetooth, etc.

AP 102 and other similar access points (not shown) operating according to one or more wireless communication technologies may thus be provided as a network, which may provide continuous or nearly continuous overlapping service to STA devices 106AN and similar devices over a geographic area, e.g., via one or more communication technologies. A STA may roam from one AP to another directly, or may transition between APs and cellular network cells.

Note that at least in some instances a STA device 106 may be capable of communicating using any of multiple wireless communication technologies. For example, a STA device 106 might be configured to communicate using one or more of Wi-Fi, LTE, LTE-A, 5GNR, Bluetooth, UWB, one or more satellite systems, etc. Other combinations of wireless communication technologies (including more than two wireless communication technologies) are also possible. Likewise, in some instances a STA device 106 can be configured to communicate using only a single wireless communication technology.

As shown, the exemplary wireless communication system also can include an access point (AP) 104, which communicates over a transmission medium with the wireless device 106B. The AP 104 also provides communicative connectivity to the network 100. Thus, according to some embodiments, wireless devices may be able to connect to either or both of the AP 102 (or a cellular base station) and the AP 104 (or another access point) to access the network 100. For example, a STA may roam from AP 102 to AP 104, e.g., based on one or more factors, such as mobility, coverage, interference, and/or capabilities. Note that it may also be possible for the AP 104 to provide access to a different network (e.g., an enterprise Wi-Fi network, a home Wi-Fi network, etc.) than the network to which the AP 102 provides access.

The STAs 106A and 106B may include handheld devices such as smart phones or tablets, wearable devices such as smart watches or smart glasses, and/or may include any of various types of devices with cellular communications capability. For example, one or more of the STAs 106A and/or 106B may be a wireless device intended for stationary or nomadic deployment, such as an appliance, measurement device/sensor, control device, etc.

The STA 106B may also be configured to communicate with the STA 106A. For example, the STA 106A and STA 106B may be capable of performing direct device-to-device (D2D) communication. In some embodiments, such direct communication between UEs may also or alternatively be referred to as peer-to-peer (P2P) communication. The direct communication may be supported by the AP 102 (e.g., the AP 102 may facilitate discovery, among various possible forms of assistance), or may be performed in a manner unsupported by the AP 102. Such P2P communication may be performed using 3GPP-based D2D communication techniques, Wi-Fi-based P2P communication techniques, UWB, BT, and/or any of various other direct communication techniques, according to various embodiments.

The STA 106 may include one or more devices or integrated circuits for facilitating wireless communication, potentially including a Wi-Fi modem, a cellular modem and/or one or more other wireless modems. The wireless modem(s) may include one or more processors (processor elements) and various hardware components as described herein. The STA 106 may perform any of (or any portion of) the method embodiments described herein by executing instructions on one or more programmable processors. For example, the STA 106 may be configured to perform techniques for handling uplink frames in access point assisted roaming in a wireless communication system, such as according to the various embodiments described herein. Alternatively, or in addition, the one or more processors may be one or more programmable hardware elements such as an FPGA (field-programmable gate array), or other circuitry, that is configured to perform any of the method embodiments described herein, or any portion of any of the method embodiments described herein. The wireless modem(s) described herein may be used in a STA device as defined herein, a wireless device as defined herein, or a communication device as defined herein. The wireless modem described herein may also be used in an AP, a base station, a pico cell, a femto cell, or other similar network side device.

The STA 106 may include one or more antennas for communicating using two or more wireless communication protocols or radio access technologies (RATs). In some embodiments, the STA 106 can be configured to communicate using a single shared radio. The shared radio may couple to a single antenna, or may couple to multiple antennas (e.g., for MIMO) for performing wireless communications. Alternatively, the STA 106 may include two or more radios, each of which may be configured to communicate via a respective wireless link. Other configurations are also possible.

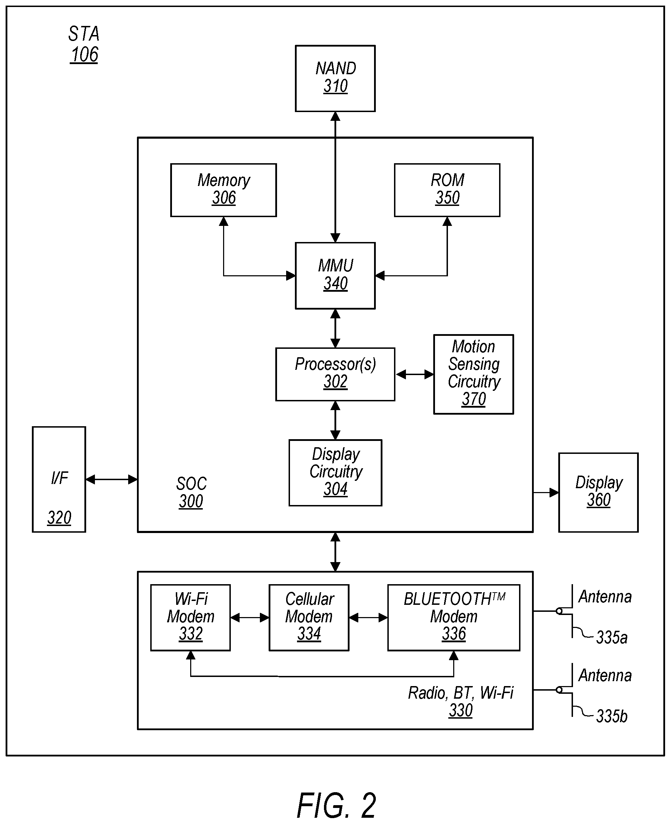

### Figure 2 - Example Block Diagram of a STA Device

Figure 2 illustrates one possible block diagram of a STA device, such as STA device 106. In some instances, the STA 106 may additionally or alternatively be referred to as a UE 106. STA 106 also may be referred to as a non-AP STA 106. As shown, the STA 106 may include a system on chip (SOC) 300, which may include one or more portions configured for various purposes. Some or all of the various illustrated components (and/or other device components not illustrated, e.g., in variations and alternative arrangements) may be "communicatively coupled" or "operatively coupled," which terms may be taken herein to mean components that can communicate, directly or indirectly, when the device is in operation.

As shown, the SOC 300 may include processor(s) 302, which may execute program instructions for the STA 106, and display circuitry 304, which may perform graphics processing and provide display signals to the display 360. The SOC 300 may also include motion sensing circuitry 370, which may detect motion of the STA 106 in one or more dimensions, for example using a gyroscope, accelerometer, and/or any of various other motion sensing components. The processor(s) 302 may also be coupled to memory management unit (MMU) 340, which may be configured to receive addresses from the processor(s) 302 and translate those addresses to locations in memory (e.g., memory 306, read only memory (ROM) 350, flash memory 310). The MMU 340 may be configured to perform memory protection and page table translation or set up. In some embodiments, the MMU 340 may be included as a portion of the processor(s) 302.

As shown, the SOC 300 may be coupled to various other circuits of the STA 106. For example, the STA 106 may include various types of memory (e.g., including NAND flash 310), a connector interface 320 (e.g., for coupling to a computer system, dock, charging station, etc.), the display 360, and wireless communication circuitry 330 (e.g., for LTE, LTE-A, 5GNR, Bluetooth, Wi-Fi, NFC, GPS, UWB, etc.).

The STA 106 may include at least one antenna, and in some embodiments may include multiple antennas, e.g., 335a and 335b, for performing wireless communication with base stations and/or other devices. For example, the STA 106 may use antennas 335a and 335b to perform the wireless communication. As noted above, the STA 106 may in some embodiments be configured to communicate wirelessly using a plurality of wireless communication standards or radio access technologies (RATs).

The wireless communication circuitry 330 may include a Wi-Fi modem 332, a cellular modem 334, and a Bluetooth modem 336. The Wi-Fi modem 332 is for enabling the STA 106 to perform Wi-Fi or other WLAN communications, e.g., on an 802.11 network. The Bluetooth modem 336 is for enabling the UE device 106 to perform Bluetooth communications. The cellular modem 334 may be capable of performing cellular communication according to one or more cellular communication technologies, e.g., in accordance with one or more 3GPP specifications.

As described herein, STA 106 may include hardware and software components for implementing embodiments of this disclosure. For example, one or more components of the wireless communication circuitry 330 (e.g., Wi-Fi modem 332, cellular modem 334, BT modem 336) of the STA 106 may be configured to implement part or all of the methods for handling uplink frames in access point assisted roaming described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

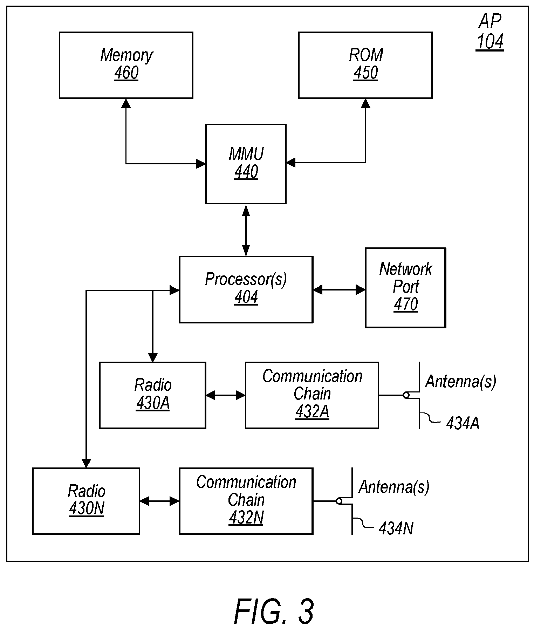

### Figure 3 - Block Diagram of an Access Point

Figure 3 illustrates an example block diagram of an access point (AP) 104, according to some embodiments. In some instances (e.g., in an 802.11 communication context), the AP 104 may also be referred to as a station (STA), and possibly more particularly as an AP STA. It is noted that the AP of Figure 3 is merely one example of a possible access point. As shown, AP 104 may include processor(s) 404, which may execute program instructions for the AP 104. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The AP 104 may include at least one network port 470. The network port 470 may be configured to couple to a telephone network and provide a plurality of devices, such as STA devices 106, with access to the telephone network as described above in Figure 1.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

The AP 104 may include one or more radios 430A-430N, which may be coupled to one or more respective communication chains and at least one antenna 434, and possibly multiple antennas. The antenna(s) 434 may be configured to operate, in conjunction with one or more other components, as a wireless transceiver and may be further configured to communicate with UE devices 106 via radio 430. The antenna(s) 434A-N communicate with one or more respective radios 430A-N via communication chains 432A-N. Communication chains 432 may be receive chains, transmit chains, or both. The radios 430A-N may be configured to communicate in accordance with various wireless communication standards, including, but not limited to, LTE, LTE-A, 5GNR, UWB, Wi-Fi, BT, etc. The AP 104 may be configured to operate on multiple wireless links using the one or more radios 430A-N. In some implementations, each radio can be used to operate on a respective wireless link.

The AP 104 may be configured to communicate wirelessly using multiple wireless communication standards. In some instances, the AP 104 may include multiple radios, which may enable the network entity to communicate according to multiple wireless communication technologies. For example, as one possibility, the AP 104 may include a 4G or 5G radio for performing communication according to a 3GPP wireless communication technology, as well as a Wi-Fi radio for performing communication according to one or more Wi-Fi specifications. In such a case, the AP 104 may be capable of operating as both a cellular base station and a Wi-Fi access point. As another possibility, the AP 104 may include a multi-mode radio that is capable of performing communications according to any of multiple wireless communication technologies (e.g., 5G NR and Wi-Fi, 5G NR and LTE, etc.). As still another possibility, the AP 104 may be configured to act exclusively as a Wi-Fi access point, e.g., without cellular communication capability.

As described further herein, the AP 104 may include hardware and software components for implementing or supporting implementation of features described herein such as handling uplink frames in access point assisted roaming, among various other possible features. The processor 404 of the AP 104 may be configured to implement, or support implementation of, part or all of the methods described herein, e.g., by executing program instructions stored on a memory medium (e.g., a non-transitory computer-readable memory medium) to operate multiple wireless links using multiple respective radios. Alternatively, the processor 404 may be configured as a programmable hardware element, such as an FPGA (Field Programmable Gate Array), or ASIC (Application Specific Integrated Circuit), or a combination thereof. Alternatively (or in addition) the processor 404 of the AP 104, in conjunction with one or more of the other components 430, 432, 434, 440, 450, 460, 470 may be configured to implement, or support implementation of, part or all of the features described herein.

### Multi-Link Communications over WLAN

Wireless local area networks (WLANs) may utilize multiple links during communications between a wireless station (STA), such as a UE 106 as illustrated in Figure 2, and a wireless access point (AP) such as the AP 104 illustrated in Figure 3, in either or both of uplink and downlink communications. The STA may be any of a variety of types of wireless stations, including but not limited to, a UE 106, a smart phone, tablet, personal computer, smart watch, accessory device, an unmanned aerial vehicle (UAV), an unmanned aerial controller (UAC), an automobile, or any other type of wireless device capable of communicating over a WLAN.

While the 802.11ax standard allows a STA and an AP to communicate according to either a 5 GHz link or a 2.4 GHz link, for example, 802.11be may allow a STA and an AP to communicate over multiple links simultaneously, potentially including 2.4 GHz, 5 GHz, and/or 6 GHz links, which may improve throughput and reduce communication latency, at least in some instances. For example, a single connection between a STA and an AP may utilize multiple wireless links, each of which operates within the same or a different frequency band.

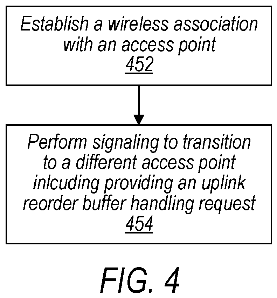

### Figure 4 - Uplink Frame Handling for Access Point Assisted Roaming

Figure 4 is a flowchart diagram illustrating a method for communication between a wireless station (STA), such as a UE 106, and a wireless access point (AP), such as the AP 104, over a WLAN, including handling uplink frames in an AP assisted roaming scenario, according to some embodiments. In various embodiments, some of the elements of the methods shown may be performed concurrently, in a different order than shown, may be substituted for by other method elements, or may be omitted. Additional method elements may also be performed as desired.

Aspects of the method of Figure 4 may be implemented by a wireless device, such as the AP 104 or UE 106 illustrated in and described with respect to Figures 1-3, or more generally in conjunction with any of the computer circuitry, systems, devices, elements, or components shown in the Figures, among others, as desired. For example, a processor (and/or other hardware) of such a device may be configured to cause the device to perform any combination of the illustrated method elements and/or other method elements.

Note that while at least some elements of the method of Figure 4 are described in a manner relating to the use of communication techniques and/or features associated with IEEE 802.11 specification documents, such description is not intended to be limiting to the disclosure, and aspects of the method of Figure 4 may be used in any suitable wireless communication system, as desired. As shown, the method may operate as follows.

A ("first") AP wireless device (which may also be referred to herein as "AP" for convenience) may establish a wireless connection with another wireless device (which may also be referred to herein as a "station" or "STA" for convenience) (452). The wireless connection may include an association established using Wi-Fi, a wireless connection established according to wireless communication techniques that are based at least part on Wi-Fi, and/or a wireless connection established according to any of various other wireless communication technologies, according to various embodiments.

In some embodiments, the wireless connection may include an infrastructure Wi-Fi connection. For example, the first AP may provide beacon transmissions including information for associating with the first AP, and one or more other wireless devices (e.g., non-AP wireless devices, which could include the STA) may request to associate with the first AP, e.g., using the information provided in the beacon transmissions, as one possibility.

In some embodiments, forming such an association may include the STA (and possibly other wireless devices associated to or potentially associating to the first AP) receiving various configuration information from the first AP. Such configuration information could include an indication of whether one or more uplink reorder buffer handling techniques is supported by the first AP, as one possibility. Additionally, or alternatively, such information could include one or more transmit opportunity (TXOP) duration limits (e.g., one for each of multiple access categories), an indication of whether multi-traffic-identifier (multi-TID) transmissions are supported, restricted target wake time service period (R-TWT SP) configuration information, stream classification service (SCS) configuration information, and/or any of various other possible types of information, according to various embodiments.

In some embodiments, the STA and the first AP may operate in a mobility domain that includes multiple APs, with support for AP assisted mobility within the mobility domain. The STA may determine to transition from the first AP to another ("second") AP, which may be another AP in the same mobility domain. In some embodiments, the first AP and the second AP may be different AP multi-link devices (MLDs) operating logically within a single mobility domain (MD) AP. In other embodiments, the first AP and the second AP may not operate as part of the same MD AP, but may both operate within the same mobility domain.

The STA may perform signaling to transition from the first AP to the second AP (454). The transition may add and enable a wireless link with the second AP while disabling (but retaining) the wireless link with the first AP, in some embodiments. Alternatively, it may be possible that the transition may include re-associating to (or associating with) the second AP and releasing the association with the first AP. Variations and alternative transition types are also possible.

The signaling may include an uplink reorder buffer handling request, which may indicate how the STA is requesting that uplink reorder buffered frames at the first AP be handled in conjunction with the transition. For example, the STA may request that first access point forward uplink reorder buffered frames for the STA to the Internet or another network (e.g., according to a configured network path for a traffic flow associated with the uplink reorder buffered frames) even if sequence number gaps remain in the uplink reorder buffer. As another possibility, the STA may request that first access point forward uplink reorder buffered frames for the STA to the second access point (e.g., for uplink reorder buffer handling at the second access point prior to the second access point forwarding ordered uplink frames to the Internet or another network in accordance with the configured network path for the traffic flow). As a further possibility, the STA may request that first access point discard uplink reorder buffered frames for the STA.

Note that in various embodiments, it may be possible for the transition signaling (e.g., including the uplink reorder buffer handling request) to be provided to either (or both) of the first AP or the second AP. The first AP and the second AP may also perform signaling with each other to support the transition, potentially including the AP that receives the indication of the uplink reorder buffer handling request from the STA informing the other AP of the uplink reorder buffer handling request.

In some embodiments, the STA may determine whether to use a pending queue in its transmission buffer, e.g., based on whether it is performing (or plans to perform) roaming, and/or based on how uplink reorder buffer handling is performed. For example, in some embodiments, the STA may determine to use a pending queue when transitioning between APs (e.g., based at least in part on the transition from the first AP to the second AP) to help protect against packet loss across (or during) the transition. In some embodiments, uplink frames stored in the pending queue of the transmission buffer may include one or more frames that have been transmitted and acknowledged and have a larger sequence number than at least one frame in a retry queue of the transmission buffer.

If the STA requests that the first AP forward uplink reorder buffered frames to the Internet, the first AP may forward the uplink reorder buffered frames for the wireless device to the Internet (or other network). If the STA requests that the first AP forward uplink reorder buffered frames to the second access point, the first AP may forward the uplink reorder buffered frames for the wireless device to the second access point. If the STA requests that the first AP discard uplink reorder buffered frames for the wireless device, the first AP may discard the uplink reorder buffered frames for the wireless device.

For uplink reorder buffered frames that are forwarded from the first AP to the second AP, it may be the case that metadata can be included to help identify the frames as uplink reorder buffered frames for the wireless device. For example, such information can include sequence number identification information, packet number identification information, access category / traffic identifier information, remaining transmit time (e.g., for delay-bound uplink traffic), and/or any of various other possible types of information.

The second AP may receive the forwarded uplink reorder buffered frames for the STA from the first AP, possibly including (or otherwise accompanied by) one or more items of metadata associated with one or more of the reorder buffered frames. The second AP may be able to identify the uplink reorder buffered frames associated with the wireless device (e.g., based at least in part on the metadata), and may be able to copy the uplink reorder buffered frames for the wireless device to a local uplink reorder buffer for the wireless device (e.g., based at least in part on identifying the uplink reorder buffered frames for the wireless device). This may be in addition to storing the uplink reorder buffered frames for the wireless device in the second AP's uplink reorder buffer for the first AP, in some embodiments.

After the transition, the STA may transmit uplink frames to the second access point. Depending on how uplink reorder buffer handling is performed, the STA may determine whether to retransmit one or more frames that were already transmitted to, and acknowledged by, the first AP. Additionally, in some embodiments, the STA may select sequence numbers for the uplink frames based at least in part on the uplink reorder buffer handling request. For example, the STA may determine whether to continue or restart (and if so, at which frame to restart) sequence numbers for uplink frames after the transition, e.g., depending on how the uplink reorder buffer at the first AP is handled in conjunction with the transition.

For example, if the STA requests that the first access point discard uplink reorder buffered frames for the wireless device, the STA may transmit any uplink frames that were in the uplink reorder buffer of the first AP (e.g., potentially including frames in the retry and pending queues of the transmission buffer) to the second AP. In this scenario, it may be the case that the STA resets sequence numbers after the transition.

If the STA requests that the first access point forward uplink reorder buffered frames for the wireless device to the Internet, the STA may transmit any uplink frames, e.g., that were in the retry queue of the transmission buffer and possibly also any uplink frames that were in the pending queue of the transmission buffer, to the second AP. In this scenario, it may be the case that the STA resets sequence numbers after the transition, beginning with the lowest sequence number frame from the retry queue. Alternatively, if the STA requests that the first access point forward uplink reorder buffered frames for the wireless device to the Internet, the STA may discard any frames in the retry and pending queues of the transmission buffer and begin transmitting uplink frames from the transmit queue of the transmission buffer. In this scenario, it may be the case that the STA resets sequence numbers after the transition, beginning with the lowest sequence number frame from the transmit queue.

If the STA requests that the first access point forward uplink reorder buffered frames for the wireless device to the second AP, the STA may transmit any uplink frames that were in the retry queue of the transmission buffer to the second AP. In this scenario, it may be the case that the STA uses continuous sequence numbers across the transition. If no pending queue is used, or if uplink frames in the pending queue of the transmission buffer are not transmitted to the second AP, it may be the case that one or more sequence number gaps (e.g., corresponding to uplink frames transmitted to and acknowledged by the first AP) can occur. Alternatively, in some instances it may be the case that the STA also transmits, to the second AP, any uplink frames that were in the pending queue of the transmission buffer. If any duplicate frames are received by the second AP, it may be the case that they are detected and filtered. For example, the second AP may receive a duplicate copy of a frame that is both forwarded from the uplink reorder buffer of the first AP to the second AP and also transmitted from the STA to the second AP. In such a scenario, the second AP may identify and discard the duplicate, e.g., based at least in part on the sequence number of the duplicate frame, since the STA may maintain sequence number continuity across the transition.

Note that in some embodiments, it may be possible for the uplink reorder buffer frames handling approach to be selected (e.g., and signaled) individually for each individual user priority value for the STA during an access point assisted roaming event. Thus, it may be the case that the first AP and the second AP handle the uplink reorder buffers for the wireless device for different user priority values differently. Alternatively, at least in some instances, it may be possible for the uplink reorder buffer frames handling approach to be selected (e.g., and signaled) collectively for multiple, or all, user priority values associated with the STA during an access point assisted roaming event.

Note further that the techniques described herein may be performed on multiple occasions, e.g., for multiple AP transitions by the STA and/or by one or more other STAs. For example, the STA could, at a different time, perform a transition from the second AP to the first AP, and could use any or all of the techniques described herein for handling the uplink reorder buffer in conjunction with the transition, as desired.

Thus, at least according to some embodiments, the method of Figure 4 may be used to provide a framework for handling the uplink reorder buffer during roaming in a wireless local area network setting, which may help improve service continuity in such a setting, among other possible benefits.

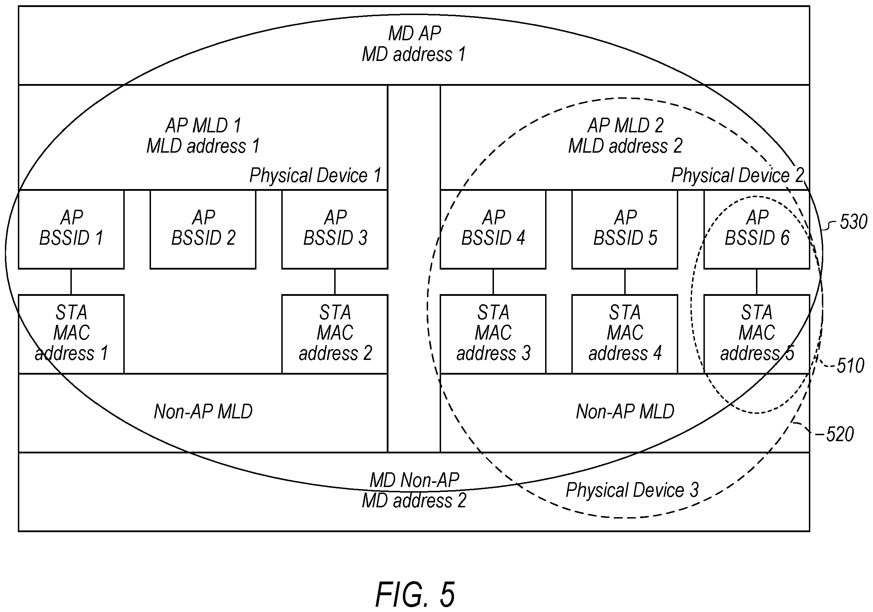

### Figures 5-19 and Additional Information

Figures 5-19 illustrate and describe further aspects that might be used in conjunction with the method of Figure 4. It should be noted, however, that the exemplary details illustrated in, and described with respect to, Figures 5-19 are not intended to be limiting to the disclosure as a whole: numerous variations and alternatives to the details provided herein below are possible and should be considered within the scope of the disclosure.

Multiple architecture models are supported across various generations of Wi-Fi. Figure 5 illustrates example aspects of several such possible Wi-Fi architectures, in which various of the embodiments described herein can be implemented, at least according to some embodiments. For 802.11ax and previous generations, it may be the case that a single link association between a STA and an AP is supported, for example with block acknowledgement (BA) and Quality of Service (QoS) maintained within the AP. The link 510 may be illustrative of such a single link between a STA (or "non-AP") and an AP, as one possibility. For 802.11be (e.g., Wi-Fi 7), association with an AP MLD may be possible, for example where multiple links between a STA MLD and an AP MLD may be supported, and BA and QoS may be maintained within the AP MLD. The set of links 520 may be illustrative of such a set of links between a STA (or "non-AP") MLD and an AP MLD, as one possibility. For a subsequent Wi-Fi generation (e.g., Wi-Fi 8), a further architecture model in which a STA can form an association with a mobility domain (MD) AP may be possible. In such an architecture, it may be the case that a STA can form multiple links with multiple AP MLDs, with a link with a single AP MLD in use at a time, and the BA and QoS may be maintained at the MD level (e.g., inherited to all AP MLDs). The system 530 may be illustrative of such an arrangement between an MD STA (or "non-AP") and an MD AP, as one possibility. Note that the MD AP may include multiple physical AP MLDs, and it may be the case that an MD AP may function as a single device in a mobility domain, for example such that fast transition may not be needed within an MD AP.

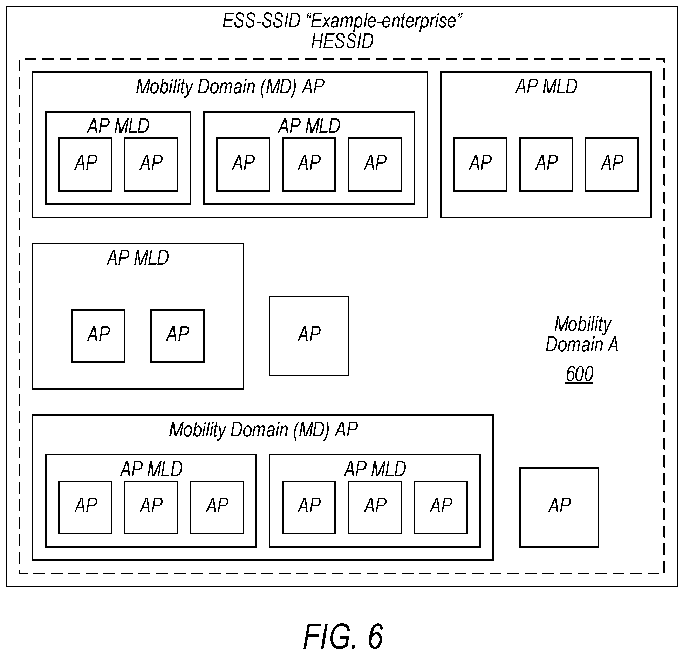

Figure 6 illustrates further possible example aspects of a Wi-Fi architecture utilizing a mobility domain concept, in which various of the embodiments described herein can be implemented, at least according to some embodiments. In the illustrated scenario, a "mobility domain A" 600 may be configured for an extended service set (ESS) - service set ID (SSID) "Example-enterprise." The homogenous extended service set identifier (HESSID) may include multiple AP devices, which may include any combination of one or more APs, one or more AP MLDs, and one or more MD APs, and may support roaming within the mobility domain. Use of one or more MD APs within such a domain may reduce roaming signaling, but regardless of the specific architecture model, for a client, it may be important to provide a framework for handling whether sequence number, packet number, and/or user priority values are continuous in the new AP, whether any buffered frames in the old AP are forwarded to the new AP, and/or how QoS is maintained in the new AP.

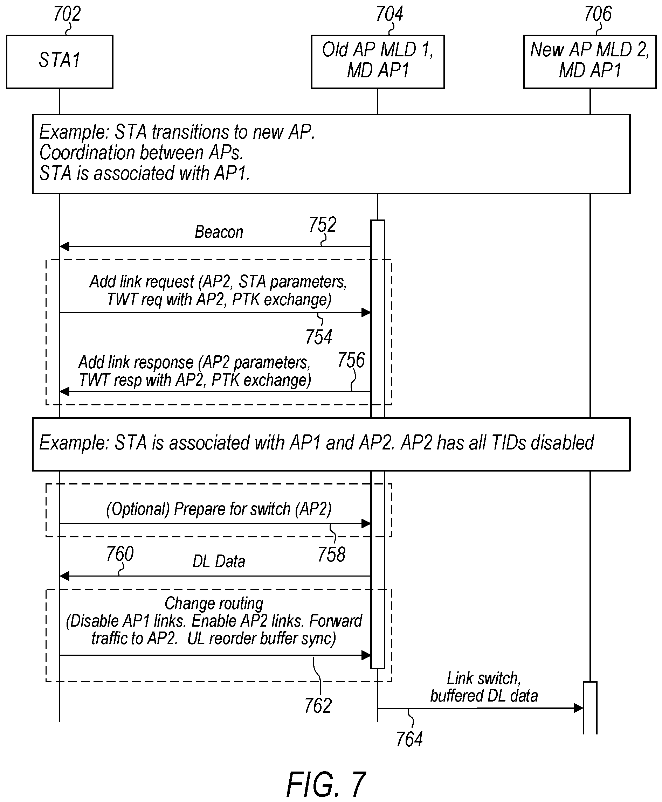

Figure 7 is a signal flow diagram illustrating example aspects of possible roaming signaling within an MD AP, according to some embodiments. In the illustrated example, a STA ("STA 1") 702 may transition from one AP ("AP MLD 1" or "old AP") 704 to another AP ("AP MLD 2" or "new AP") 706 within the same MD AP ("MD AP 1"). As shown, after receiving beacon information from the old AP 704 (752), STA1 702 may send old AP 704 an add link request, indicating a request to add a link to the new AP 706 (e.g., with STA parameter information, a target wake time (TWT) request, etc.) (754). The old AP 704 may transmit an add link response to the STA1 702 (e.g., with AP parameter information, a TWT response, etc.) (756). Thus, the link may be created through the old AP 704, such that one or more AP and/or STA parameters are configured and ready for use. Further, one or more BA and/or stream classification service (SCS) parameters may be inherited.

After adding the link, the STA may be associated with AP MLD 1 704 and AP MLD 2 706, with all TIDs disabled for AP MLD 2 706. As optional pre-switch signaling, the STA 1 702 may transmit an indication to AP MLD 1 704 to prepare for switching to AP MLD 2 706 (758). The AP MLD 1 704 may continue to provide downlink data to STA 1 702 (760). In some instances, the AP MLD 1 704 may start to forward uplink reorder buffered frames and/or downlink data to AP MLD 2 706, or may forward uplink reorder buffered frames to the Internet, e.g., according to the preference of the STA 1 702. The STA 1 702 may transmit an indication to change routing to AP MLD 1 704 (e.g., indicating to disable AP MLD 1 704 links, enable AP MLD 2 706 links, and forward traffic to AP MLD 2 706) (762). Though not shown, it may alternatively be possible for such an indication to be provided to the new AP 706, in some embodiments. The switch to the new AP 706 may be a fast transition, e.g., with old AP 704 indicating the link switch and providing buffered downlink data to new AP 706 (764). New downlink data may subsequently be delivered to the new AP 706. Note that signaling other than what is illustrated in Figure 7 (e.g., between STA 702 and the old AP 704, between the STA 702 and the new AP 706, between the old AP 704 and the new AP 706, etc.) may also occur. The illustrated signaling is not intended to be exhaustive, and additional, different, and/or less signaling may be implemented in some embodiments.

Note that in some instances, it may also be possible to exchange key information for the link between STA 1 702 and the new AP 706 as part of the roaming signaling performed in the scenario of Figure 7. For example, a four-way handshake (or possibly a three-message based approach or other arrangement) could be used to set up the pairwise transient key (PTK) for the new AP 706.

In some embodiments, it may be possible for the STA 1 702 to indicate a preference for how to handle uplink reorder buffer synchronization for the transition from the old AP 704 to the new AP 706. For example, in the indication to change routing, the STA 1 702 may provide information indicating such a preference, which could include whether the old AP 704 should delete any uplink reorder buffered frames (e.g., in which case the STA 1 702 may retransmit them to the new AP 706), forward any uplink reorder buffered frames to the Internet, and/or forward any uplink reorder buffered frames to the new AP 706, as various possibilities.

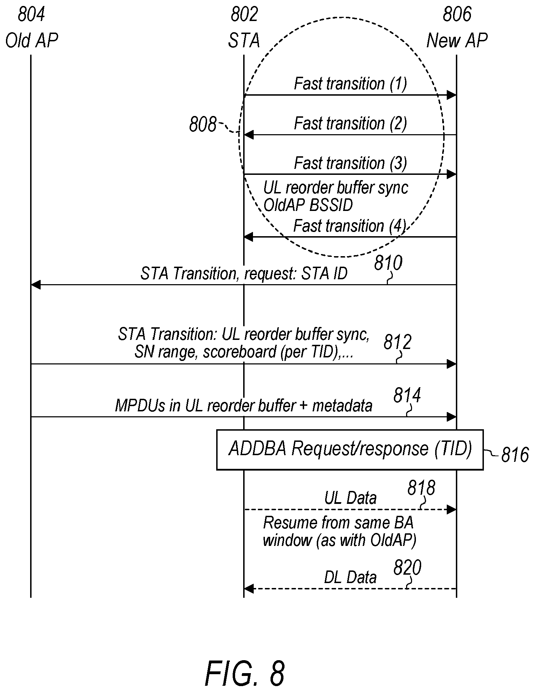

Figure 8 is a signal flow diagram illustrating example aspects of another possible AP transition signaling approach, according to some embodiments. This signaling illustrated in Figure 8 may be performed between any of APs, AP MLDs, or MD APs in a mobility domain, at least in some embodiments; in the illustrated scenario, the signaling may be performed between a STA 802, an AP ("old AP") 804 from which the STA is transitioning, and an AP ("new AP") 806 to which the STA is transitioning. The AP transition may include a phase in which fast transition frames 1-4 are exchanged between the STA and the new AP (808). The STA may signal its preference for how to handle the old AP uplink reorder buffer, for example indicating whether the old AP uplink reorder buffer, or its content, is synchronized with the new AP, forwarded to the Internet, or discarded. The old AP 804 and the new AP 806 may exchange STA transition signaling for the STA 802, which may include the new AP 806 requesting STA ID information for the STA transition from the old AP 804 (810), and the old AP 804 providing STA transition information to the new AP 806 (812). The old AP 804 may send to the new AP 806 reorder buffered uplink MAC protocol data units (MPDUs) and associated meta data, for each TID (e.g., if applicable in view of the signaled preference for how to handle the old AP reorder buffered frames) (814). The STA 802 and the new AP 806 may exchange ADDBA request/response frames (816). After the AP transition signaling, the STA 802 may transmit uplink data to the new AP 806 (818), and the new AP 806 may transmit downlink data to the STA 802 (820). If the uplink reorder buffer is forwarded to the new AP 806, the new uplink frames may have continuous sequence numbering, at least in some embodiments.

Prior to an AP transition, it may be the case that a STA sends one or more block acknowledgement request (BAR) frames to the old AP to forward the reorder buffered uplink frames to the Internet. In some instances, it could occur that the old AP does not receive the uplink BAR frame(s). In this case, it may be unclear whether the old AP has forwarded the reorder buffered uplink frames to the Internet. The reorder buffered frames may potentially suffer from long delays and/or frame loss in such a scenario. Alternatively, if the old AP does receive the UL BAR frame(s), for one or more uplink frames that were missing from the reorder buffer, it may be the case that the STA has to either discard any unreceived uplink frames, due to incorrect transmission order, or send the unreceived uplink frames to the new AP in incorrect order.

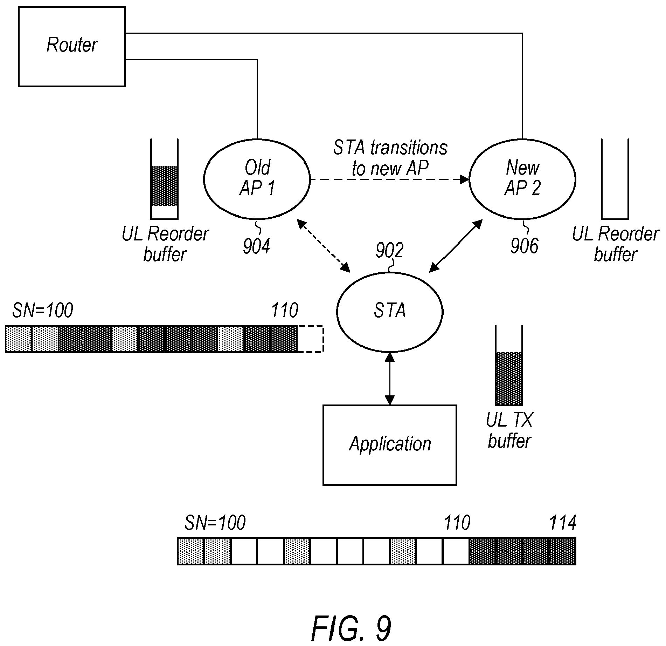

Figure 9 illustrates example aspects of a possible scenario in which a STA 902 transitions from an old AP 904 to a new AP 906, where the uplink reorder buffer at the old AP includes gaps for certain frames that were not successfully received by the old AP. In the illustrated example, SNs 100, 101, 104, 108 may be failed frames at the old AP 904, such that SNs 102, 103, 105, 106, 107, 109, 110 may be stored in the uplink reorder buffer at the old AP 904. There may be several possible options for how to handle such uplink frames in conjunction with an AP transition. As previously noted herein, it may be possible, at least in some embodiments, that a STA can select how to handle this uplink reorder buffer synchronization between the old AP and the new AP from among such possible options. For example, the STA may signal its preferred option for the uplink reorder buffer handling in the roaming request (reassociation request), in some instances.

As one possible option, the STA can request that the old AP forward the uplink reorder buffer to the Internet. In such a scenario, the STA may retransmit any missing uplink frames in an incorrect order or may discard one or more such frames. It may be specified that the STA shall reset the sequence number for transmitting uplink frames to the new AP in this option, in some instances. This approach may benefit from relatively fast forwarding of the uplink frames buffered at the old AP to the Internet, and may be supported by legacy operating devices, at least in some instances.

As another possible option, the STA can request that the old AP discard all uplink reorder buffered frames. In such a scenario, the STA may retransmit all uplink reorder buffered frames to the new AP. The STA may reset the sequence number for transmitting uplink frames to the new AP in this option, in some instances. This approach may benefit from avoiding any uplink frames being lost, at least in some instances.

As still another possible option, the STA can request that the old AP forward the uplink reorder buffer to the new AP. In such a scenario, the STA may continue uplink frame transmission to the new AP. It may be specified that the STA shall use continuous sequence numbers for transmitting uplink frames in the old AP and the new AP in this option, in some instances. This approach may also benefit from avoiding any uplink frames being lost, at least in some instances.

Note that it may be the case that one or both of the old AP or the new AP can signal whether one or more uplink reorder buffer handling options are supported by the AP, for example including whether frames forwarding from an old AP to a new AP is supported by a given AP.

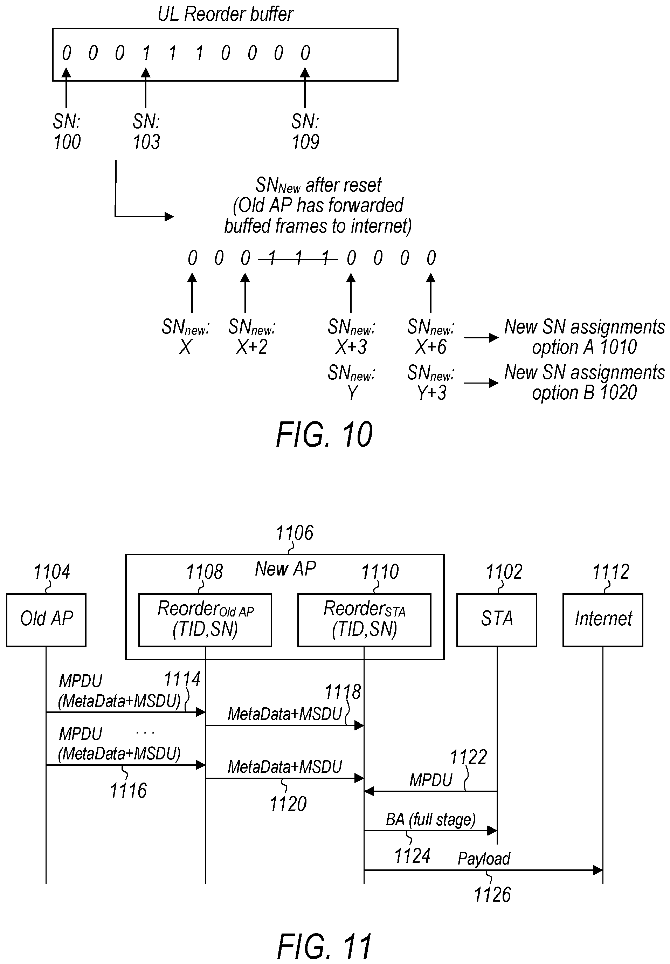

Figure 10 illustrates aspects of an example scenario showing how sequence numbering may be handled in conjunction with such roaming by a STA, in some embodiments. In the illustrated scenario, the old AP uplink reorder buffer at roaming may note SNs 100-102 as not received by the AP, and SNs 103-105 as having been received and buffered by the AP. Subsequent SNs 106-109 may not yet have been received.

The STA may select the SNs for transmitted uplink frames to the new AP depending on the uplink frames handling mode selected by the STA. For a scenario in which the old AP is requested to discard all uplink reorder buffered frames, the STA may transmit all frames from SN 100 onward to the new AP, and the STA may or may not reset the sequence numbering. For a scenario in which the old AP is requested to forward the uplink reorder buffered frames to the new AP, the STA may transmit frames with SN 100-102 and SN 106 onward to the new AP, or may transmit all frames from SN100 onward to the new AP, with the same sequence numbering. The new AP may filter any duplicated uplink frames. For a scenario in which the old AP forwards uplink reorder buffer (e.g., with holes) to the Internet, the STA may reset the uplink sequence number and select whether it sends all, or selected frames. In the example scenario of Figure 10, one option ("option A" 1010) for the new SN assignments may be used when all uplink frames are transmitted (incorrect receive order), or another option ("option B" 1020) for the new SN assignments may be used when missed uplink frames are erased.

Figure 11 is a signal flow diagram illustrating example aspects of possible uplink reorder buffered frame forwarding from an "old" AP 1104 to a "new" AP 1106 for a STA 1102 transitioning from the old AP 1104 to the new AP 1106. In the illustrated scenario, the STA 1102 may request that the old AP 1104 forward uplink reorder buffered frames to the new AP 1106. The old AP 1104 may forward all reorder buffered frames to the new AP 1106 (1114, 1116). The metadata for the frames may enable the new AP 1106 to reorder buffer the frames for the STA 1102 similarly as in the old AP 1104 (e.g., moving the frames from the reorder buffer 1108 for the old AP 1104 to the reorder buffer 1110 for the STA 1102 (1118, 1120)). The forwarded frames may include the status of the reorder buffer (BA bitmap), and the total number of buffered frames. The BA (1124) from the new AP 1106 to the STA 1102 in response to the next uplink frame (1122) from the STA 1102 may contain reorder buffer status information that is based at least in part on the forwarded uplink reorder buffered frames. It may be the case that value 1 in the BA bitmap signals that the MPDU is received, while value 0 means that the MPDU is not received, or not defined. Thus, it may be possible for the BA bitmap to signal value 1 if a frame is buffered in the STA specific reorder buffer 1110, even if the STA 1102 has not sent the frame to the new AP 1106. The STA 1102 may select the frames it transmits to the AP 1106 based on the received BA, such that the STA 1102 may be able to avoid transmission of already received MPDUs, at least in some instances. Optionally, it may be possible for the new AP to have the capability to improve reorder buffer efficiency by immediately placing received frames from the old AP in the link specific reorder buffer and in the STA specific reorder buffer, e.g., to reduce reorder buffer delays in the new AP. The new AP 1106 may send the payload received from the STA 1102 (and potentially including frames forwarded from the old AP 1104) to the Internet 1112 (1126).

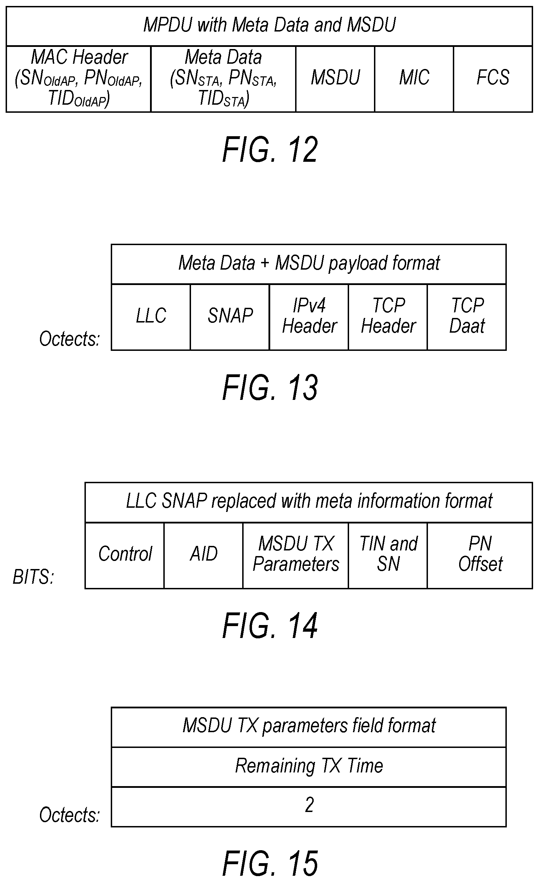

Figures 12-15 illustrate possible example aspects of frame formats for buffer forwarding from an old AP to a new AP, according to some embodiments. The handover signaling may set the basic values for SN, PN, and may assign association identifier (AID) for forwarding STA information. This may create base values for the fields. Each frame may contain the MPDU specific delta values (e.g., to indicate offsets relative to the base values), in some embodiments. The metadata may contain STA specific parameters; the control field may signal whether the MSDU is from the uplink reorder buffer or the downlink transmission buffer. The AID may identify the STA. The MSDU TX parameters may indicate the remaining TX time for the MSDU (e.g., for time-limited / latency sensitive frames), possibly in units of 50 µs. A value of 0 may signal that the delay bound parameter is not in use. The TID and SN field may include the TID (e.g., 4 bits), which may be set to the TID of the frame in the old AP, and the SN (e.g., 12 bits), which may be set to the sequence number of the frame in the old AP. The PN offset may be the additional value needed to be added to the base value to determine the PN for the frame.

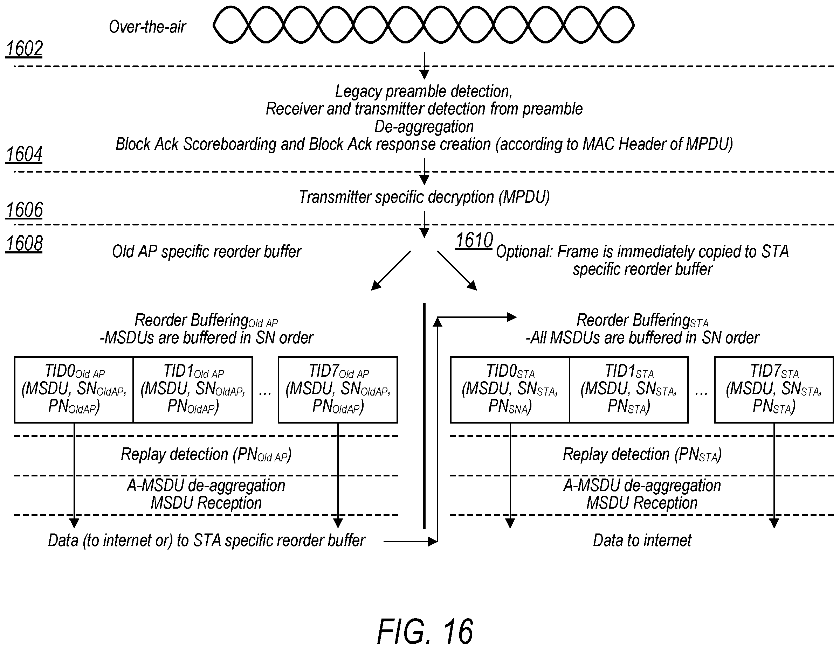

Figure 16 illustrates further possible example details of an approach to improving reorder buffer efficiency when uplink reorder buffered frames are forwarded from the old AP to the new AP, according to some embodiments. In the illustrated scenario, the new AP may receive a frame with STA specific uplink reorder buffer data from the old AP (1602). The new AP may perform legacy preamble detection, receiver and transmitter detection from the preamble, de-aggregation, BA scoreboarding and BA response creation (e.g., according to the MAC header of the MPDU) (1604). The new AP may also perform transmitter specific decryption for the MPDU (1606). The frame from the old AP may always be put into the old AP reorder buffer (1608). Optionally, as shown, the frame may be put immediately also into the STA specific reorder buffer (1610), for example based on the metadata identifying the STA associated with the frame and indicating that it is an uplink reorder buffered frame for the STA. Thus, by potentially immediately placing the received frame in the STA specific reorder buffer, it may be possible to reduce the reorder buffer delays for the new AP.

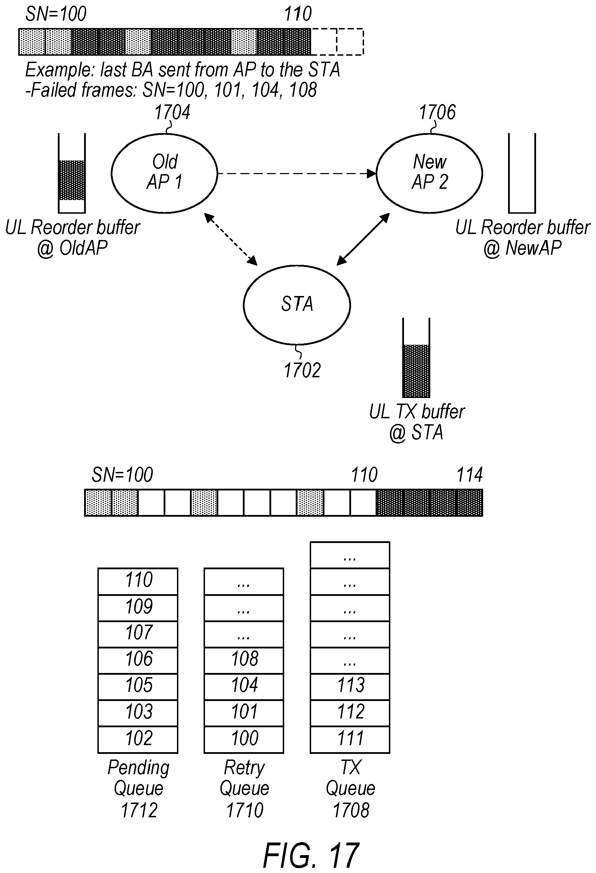

Currently, it may be the case that a STA may (re)transmit failed frames and non-transmitted frames. Transmission of the whole uplink reorder buffer in an AP transition may require an implementation specific solution for the STA. Figures 17-19 illustrate example aspects for such uplink transmission buffer management at a STA 1702 in conjunction with a possible roaming transition from an "old" AP 1704 to a "new" AP 1706, according to some embodiments.

As shown, in the illustrated scenario of Figure 17, the STA 1702 may implement its transmission buffer with multiple queues, including a transmit queue 1708 for frames not yet transmitted, a retry queue 1710 for frames transmitted one or more times (e.g., containing frames that are missing from the reorder buffer at the old AP 1704), and (possibly optionally) a pending queue 1712 for acknowledged frames stored in the AP's uplink reorder buffer. The STA 1702 may start populating the pending queue before performing roaming, in some embodiments. The pending queue and the retry queue may have all frames for complete uplink reorder buffer retransmission. For example, in the illustrated scenario, the pending queue could include frames with SNs 102-103, 105-107, and 109-110, when the retry queue includes frames with SNs 100, 101, 104, and 108, and the TX queue includes frames with SNs 111-113. Once a frame from the retry queue is acknowledged, that frame as well as any frames in the pending queue with lower SNs than that frame may be discarded from the transmission buffer, e.g., since they may no longer be stored in the AP's uplink reorder buffer, at least in some embodiments.

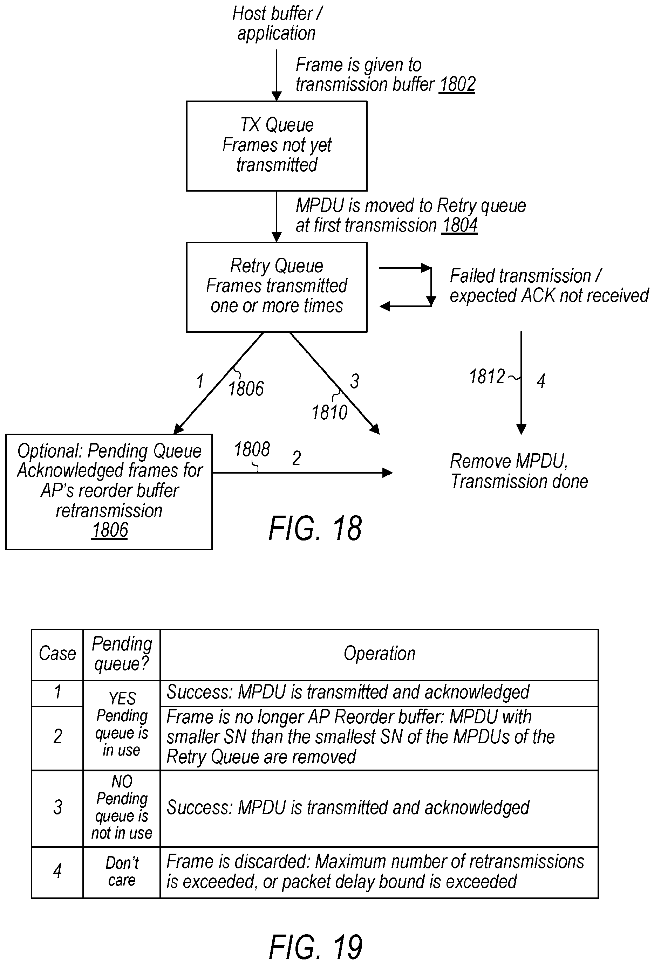

Figures 18 is a flowchart diagram illustrating example aspects of such a possible uplink transmission buffer handling approach at a STA, while Figure 19 is a table illustrating possible operations that could be performed in conjunction with the techniques of Figure 18, according to some embodiments. As shown, a frame may be received to a transmit queue of a STA from a host buffer / application, where it may be stored while not yet transmitted (1802). The MPDU may be moved to a retry queue at first transmission (1804). If the frame is transmitted and acknowledged and a pending queue is in use, the frame may be moved to the pending queue while it is in the AP's uplink reorder buffer, e.g., due to one or more frames with smaller SNs still being in the retry queue ("Case 1" 1806). Once the frame is no longer in the AP's uplink reorder buffer (e.g., any frames with smaller SNs than the smallest SN of the frames of the retry queue), it may be removed from the pending queue ("Case 2" 1808). It may also be possible that any frames that exceed a maximum number of retransmissions, or for which the packet delay bound is exceeded, may similarly be discarded from the pending queue of the transmission buffer.

If the pending queue is not in use, and a frame is transmitted and acknowledged, the frame may be removed from the transmission buffer ("Case 3" 1810). Similarly, any frames that exceed a maximum number of retransmissions, or for which the packet delay bound is exceeded, may be discarded from the transmission buffer ("Case 4" 1812).

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A processor comprising memory and circuitry configured to cause a wireless device to:
generate signaling associated with a transition from a first access point to a second access point;
generate, as part of the signaling, an uplink reorder buffer handling request.

2. The processor of claim 1, wherein the uplink reorder buffer handling request indicates whether the wireless device requests that the first access point:
forward uplink reorder buffered frames to the Internet;
forward uplink reorder buffered frames to the second access point; or
discard uplink reorder buffered frames.

3. The processor of any of the preceding claims,
wherein the uplink reorder buffer handling request is provided to the first access point.

4. The processor of any of the preceding claims,
wherein the uplink reorder buffer handling request is provided to the second access point.

5. The processor of any of the preceding claims, wherein the memory and circuitry are further configured to cause the wireless device to:
transmit one or more uplink frames to the second access point, wherein sequence numbers for the one or more uplink frames are selected based at least in part on the uplink reorder buffer handling request.

6. The processor of any of the preceding claims, wherein the memory and circuitry are further configured to cause the wireless device to:
store one or more uplink frames in a pending queue of a transmission buffer, wherein the one or more uplink frames stored in the pending queue include one or more frames that have been transmitted and acknowledged and have larger sequence numbers than at least one frame in a retry queue of the transmission buffer.

7. The processor of claim 6, wherein the memory and circuitry are further configured to cause the wireless device to:
determine to use the pending queue based at least in part on the transition from the first access point to the second access point.

8. A method, comprising:
by a first access point device:
receiving an indication to transition a wireless device from the first access point device to a second access point device; and
receiving an indication of an uplink reorder buffer handling request for the transition.

9. The method of claim 8,
wherein the uplink reorder buffer handling request requests that the first access point forward uplink reorder buffered frames to the Internet, wherein the method further comprises, by the first access point device:
forwarding uplink reorder buffered frames for the wireless device to the Internet.

10. The method of claim 8,
wherein the uplink reorder buffer handling request requests that the first access point forward uplink reorder buffered frames to the second access point, wherein the method further comprises, by the first access point device:
forwarding uplink reorder buffered frames for the wireless device to the second access point.

11. The method of claim 8,
wherein the uplink reorder buffer handling request requests that the first access point discard uplink reorder buffered frames for the wireless device, wherein the method further comprises, by the first access point device:
discarding uplink reorder buffered frames for the wireless device.

12. The method of any of claims 8-11,
wherein the indication of the uplink reorder buffer handling request for the transition is received from the wireless device.

13. The method of any of claims 8-12, wherein the method further comprises, by the first access point device:
providing an indication of the uplink reorder buffer handling request for the transition to the second access point.

14. The method of any of claims 8-11,
wherein the indication of the uplink reorder buffer handling request for the transition is received from the second access point device.

15. A computer program comprising instructions for performing any of the methods of claims 8-14.
